# EUROPEAN PATENT APPLICATION

(11) **EP 4 282 927 A1**
(43) Date of publication of application: **29.11.2023**
(21) Application number: 22762655.3
(22) Date of filing: 11.02.2022
(51) Int. Cl.: C09D 11/30, C04B 41/81

(54) **NON-SLIP DIGITAL INK, PRODUCTION METHOD AND CERAMIC TILE**

(30) Priority: 05.03.2021 ES 202130192
(71) Applicant: Torrecid, S.A., 12110 Alcora (Castellón) (ES)
(72) Inventor: RUIZ VEGA, Óscar, 12110 Alcora (ES)
(74) Representative: Carlos Hernando, Borja
(86) International application number: PCT/ES2022/070068
(87) International publication number: WO 2022/184949

(57) **Abstract**

The present invention relates to an ink composition that can be applied by means of drop-on-demand (DoD) ink-jet technology of the type which, without altering the decoration or the surface of the ceramic tile glaze, provides an Rd value greater than or equal to 45 when subjected to a firing cycle at a maximum temperature of 950 - 1,250°C.

## Description

The present invention falls within the field of inks for ink-jet technology by means of drop-on-demand (DoD) technology of the type which, without altering the decoration or the surface finish of the ceramic tile glaze, provides non-slip property when subjected to a firing cycle at a maximum temperature of 950 - 1,250°C.

### STATE OF THE ART

In the state of the art there are examples of solutions intended to achieve ceramic tiles with certain non-slip properties. In this sense, patent ES2233205B1 protects a product that can be applied to ceramic tiles comprising a homogeneous mixture of a liquid medium and refractory materials, in order to achieve tiles having high adhesion. Refractory materials consist of a mixture of one or more clay materials, kaolins, silicates, alumininates, magnesium oxides and hydroxides, calcium, strontium, barium, tungsten, zinc, aluminium, silicon, tin and antimony. However, in patent ES2233205B1, as the description of the patent states, the mixture is intended to be applied by means of traditional techniques such as spray, disc, screen printing and the like. Therefore, it has no application in ink-jet technology. In fact, the mixture according to patent ES2233205B1 does not include frit, which prevents its viability for applications of refractory nanoparticles, since a good adhesion is not achieved of said refractory nanoparticles to the surface of the ceramic tile. Another limitation that the aforementioned patent presents is that the mixture is not a transparent application, which limits the current aesthetic possibilities that are required in the ceramic tile sector. Finally, it should also be noted that patent ES2233205B1 does not describe the grinding process of refractory materials, which is a fundamental aspect if transparency and non-slip properties are to be achieved.

Digital inks having non-slip properties are also described in the state of the art, as is the case of application ES2626073A1. This patent describes an ink having at least non-slip and/or metallic effect comprising a solvent, a mix of binders, particles with metallic and/or non-slip effect up to 100 micrometres and a reagent. However, as described in the application, said ink is intended for glasses the tempering temperatures of which are 700°C or less, and it is not valid for ceramic tiles, which require a firing cycle at a maximum temperature of 950-1,250°C. In this sense, application ES2626073A1 includes between 10% and 20% of a frit for glass, with a particle size between 10 microns and 100 microns.

However, patent application ES2626073A1 presents several limitations. First, it does not provide data on the thermal properties of the frit, such as the softening temperature, which is a fundamental piece of data to adjust its application to the type of product. In fact, the thermal properties of frits for glass applications, wherein the maximum tempering temperature is 700°C, are different from those of frits for ceramic tiles, which require temperatures above 700°C. In fact, in the description of the application ES2626073A1 it is specified that glass frits are used and, therefore, they do not have application in ceramic tiles.

Another limitation of the patent application ES2626073A1 is the particle size of the frit being described, between 10 microns and 100 microns. ink-jet inks require that the particle size of the particles does not exceed 300 nanometres of D90. Otherwise, adverse effects occur such as clogging of the filters that are installed in ink-jet printing equipment and, even more serious, the obturation of the holes of the injection heads, preventing the ink from coming out during the printing process.

Another additional limiting aspect of application ES2626073A1 is the use of celluloses such as hydroethylcellulose and hydropropylcellulose, which can cause the filters of ink-jet printing equipment to be clogged.

Finally, it should be noted that in application ES2626073A1, quartz or corundum are used as particles having non-slip properties. It has been observed that said particles present the problem that, when deposited on the previously glazed and/or decorated tile, decrease the transparency of the surface once the ceramic tile has been fired, which entails a loss of quality and decorative effects, both aesthetic and chromatic, of the final product. The present invention overcomes the limitations described above by means of a non-slip digital ink which provides non-slip properties to ceramic tiles and, due to its transparency, does not alter the aesthetic and/or chromatic effects derived from the enamels and chromatic inks previously applied to the non-slip digital ink.

Quartz and corundum particles are opaque, but by subjecting them to a specific grinding process to avoid subsequent agglomeration and reach a particle size (D90) equal to or less than 300 nanometres, the non-slip digital ink according to the invention is achieved to be transparent when, obtained according to the method described, it is applied on a ceramic tile and subjected to a firing cycle at a maximum temperature comprised between 950 and 1,250°C.

### DESCRIPTION OF THE INVENTION

Throughout the description and the claims, the word "comprises" and its variants do not intend to exclude other technical features, additives, components or steps. Furthermore, the word "comprises" includes the case of "consists of". For those skilled in the art, other objects, advantages and features of the invention may be partially deduced from both the description and the embodiment of the invention.

The present invention has as its first object a digital ink composition that can be applied by means of drop-on-demand (DoD) ink-jet technology of the type which, without altering the decoration or the surface of the ceramic tile glaze, provides non-slip property when subjected to a firing cycle at a maximum temperature comprised between 950 and1,250°C, and comprising:
a. 76.1 % of a frit or mixture of frits concentrate, obtained through a grinding process,
b. 23.5% of a concentrate of a solid raw material or mixture of solid raw materials, obtained through a grinding process comprising:
   i. Mixing in a mixer of a raw material or mixture of solid raw materials, selected from the group comprising quartz, alumina, mullite, sodium feldspar, potassium feldspar, wollastonite and zinc oxide, and in a percentage by weight comprised between 36% and 64% of the weight of the concentrate,
   ii. Introduction in a mill, with microbeads having a diameter of 0.3 - 0.4 mm for grinding, of the raw material or mixture of previously mixed solid raw materials, of at least one liquid dispersant in a percentage by weight comprised between 3.95% and 7% of the weight of the concentrate, and at least one solvent or mixture of liquid solvents up to the total weight of the concentrate,
   iii. Grinding until a D90 particle size of 300 nm or less is achieved.
c. An anti-foaming agent or mixture of anti-foaming agents in a percentage by weight comprised between 0.020% and 0.05% of the weight of the ink,
d. A wetting agent or mixture of wetting agents in a percentage by weight comprised between 0.05% and 0.20% of the weight of the ink,
e. A solvent or mixture of solvents to complete the total weight of the ink.

The term "frit or mixture of frits concentrate", as it is used herein, refers to a composition comprising a frit or mixture of frits, a dispersant or mixture of dispersants and, a solvent or mixture of solvents. Said frit or mixture of frits concentrate is characterised in that it is produced through a grinding process and, subsequently, it is mixed with other concentrates or components to formulate the final ink. In this sense, the frit or mixture of frits concentrate present in the non-slip digital ink according to the present invention preferably comprises:
a. A frit or mixture of frits having a particle size (D90) equal to or less than 300 nm, a softening temperature comprised between 950 and1,180°C, in a percentage by weight comprised between 33% and 53% of the weight of the concentrate. In the formulation of the frit or mixture of frits concentrate, according to the present invention, the selection of the softening temperature and mixing of one or more frits will be determined by the firing cycle. In this way when a lower temperature firing cycle is used, for example, around 950°C or 1,000°C, it is possible to formulate a non-slip digital ink with only one frit in the formulation, the softening temperature of which would be around said range. As the temperature of the firing cycle increases, the non-slip digital ink according to the present invention is formulated with two or more frits of different softening temperature, in the proportion that ensures the adherence and integration of the frits and the raw material particles in the ceramic tile at the maximum firing temperature of the kiln. Another aspect of the invention is the possibility of adjusting the integration and adherence of the raw material particles through the concentration of said frits in the frit or mixture of frits concentrate. As indicated, in accordance with the present invention, the frit or mixture of frits is present in the frit concentrate in a percentage by weight comprised between 33% and 53% of the weight of the concentrate.
b. A dispersant or mixture of dispersants in a percentage by weight comprised between 3.4% and 5.40% of the weight of the concentrate. Their selection will depend on the non-slip digital ink medium. In other words, if the medium is polar, specific dispersants for polar media will be used and, if the medium is nonpolar, the dispersant or mixture of dispersants will be selected for said medium. In this sense, there are numerous examples in the state of the art of commercial dispersants available for both media. So examples of dispersants for polar media, by way of example but not limitation, are acrylic copolymer derivative, polyacrylate salt and phosphoric polyether. As for examples of dispersants for non-polar media, by way of example but not limitation, are derived from carboxylic acids, polymeric fatty esters and polymeric esters.
c. A solvent or mixture of solvents to complete the total weight of the concentrate,

The term "raw material or mixture of raw materials concentrate", as it is used herein, refers to a composition comprising a raw material or mixture of raw materials, a dispersant or mixture of dispersants and, a solvent or mixture of solvents. Said raw material concentrate or mixture of raw materials is characterised in that it is obtained through a grinding process and, subsequently, it is mixed with other concentrates or components to formulate the final ink. In this sense, the concentrate of a raw material or mixture of raw materials, according to the present invention, contributes to achieving the non-slip property of the ceramic tile. It should be mentioned that all solids used as raw materials are opaque, but, once ground and combined according to the invention and, applied and fired on the ceramic tile they become transparent, in the sense that they do not alter the aesthetic and/or chromatic effects derived from the glazes and chromatic inks applied to the ceramic tile prior to the non-slip digital ink. For this, the grinding process of said concentrate comprises the steps described above.

The raw material or raw material mixture concentrate according to the present invention further comprises a dispersant or mixture of dispersants, in a percentage by weight comprised between 3.95% and 7% of the weight of the concentrate. Their selection will also depend on the polar or non-polar medium of the non-slip digital ink. As stated earlier in this description, there are numerous examples in the state of the art of commercial dispersants available for both media. Likewise, the raw material or mixture of raw materials concentrate, according to the present invention, further comprises in its formulation one or several solvents. In the same manner, the selection of solvents will be determined by the final polarity to be provided to the non-slip digital ink, as well as other previously mentioned aspects of costs and compatibility with the components of the injection equipment. In this sense, there are numerous examples in the state of the art of polar or non-polar solvents of known viscosity.

It should also be noted that the non-slip digital ink object of the invention is introduced into a digital printing equipment and is continuously in motion in the printing circuit. As a consequence foam and bubbles are generated. The presence of foam or bubbles is a big problem when printing using DoD technology since the ink-jet head injects air instead of ink, which causes a defect in the printing. Therefore, the present invention comprises an anti-foaming agent or mixture of anti-foaming agents in a percentage by weight comprised between 0.020% and 0.05% of the weight of the ink. Examples of commercial anti-foaming agents, by way of example but not limitation, are BKY67, BYK81, BYK88, BYKA530, BYK52, BYK1752 and BYK A505, all of them viable in both polar and non-polar media.

The present invention also contemplates that the non-slip digital ink comprises in its composition a wetting agent or mixture of wetting agents in a percentage by weight comprised between 0.05% and 2% of the weight of the ink. Examples are, by way of example but not limitation, a mixture of ethers with polyethylene-polypropylene glycol with monobenzyl ether and C8-C10 alcohols, polyether-polysiloxane copolymer, non-ionic surfactants, polyether modified polydimethylsiloxane, fluorinated derivatives, alkoxylated alcohols, ethylene oxide and polyethylene copolymers and polyester modified polydimethylsiloxanes.

As a final adjustment of the non-slip digital ink formulation, according to the present invention, the addition of a solvent or mixture of solvents is further contemplated to complete the total weight of the ink. In order to ensure the complete stability of the non-slip digital ink formulation, the selection of the solvent or mixture of solvents coincides with the polarity of the solvents present in the frit or mixture of frits concentrate and in the raw material or mixture of raw materials concentrate.

Another feature of the present invention is that, to achieve the desired properties, in the formulation of the ink and of the frit or mixture of frits concentrates and of a raw material or mixture of raw materials concentrates, the solvent or mixture of solvents must have a viscosity at 25°C comprised between 1 cP and 50 cP and, furthermore, in the case of a mixture of solvents, at least 80% of said mixture must have a viscosity equal to or less than 20 cP. In the field of ink-jet inks, the use of the centipoise unit (cP) is common, where 1 cP is equivalent to 0.001 Pa s in the International System of Units. The selection of solvents will be determined by the final polarity to be provided to the non-slip digital ink. There are numerous examples in the state of the art of polar to non-polar solvents of known viscosity. Nevertheless, the selection of solvents will not only depend on the viscosity value, but also other aspects such as availability, the price or the compatibility with the components of the injection equipment (membranes, pumps, filters and, in general, any component in contact with the digital ink).

The present invention also contemplates two additional features of the frit or mixture of frits concentrate and of the raw material or mixture of raw materials concentrate. On one hand, the first additional feature is that the final viscosity values of the concentrate at 40°C as a function of the shear rate of the concentrate are:
a. Between 3 cP and 35 cP at 10 s⁻¹ shear rate.
b. Between 10 cP and 20 cP at 100 s⁻¹ shear rate.
c. Between 10 cP and 20 cP at 1000 s⁻¹ shear rate.

The shear rate was measured with an Anton Paar model MCR102 cone-plate rheometer. The method for measurement consists of placing the ink on a horizontal heated plate. Subsequently, the cone lowers and begins to rotate, measuring the torque. From the torque value, the viscosity value is calculated at a given temperature and shear rate.

The second additional feature of the frit or mixture of frits concentrate and of the raw material or mixture of raw materials concentrate is that the final surface tension value is comprised between 15 mN/m and 35 mN/m.

In order to achieve that the digital ink composition object of the invention provides the non-slip property without affecting the transparency and aesthetic finish of the ceramic tile, the simultaneous combination of the same ink formulation, of a specific production process of the raw material or mixture of raw materials concentrate, and a specific production method for the ink is required. In this sense, the present invention contemplates, as the second object of the invention, a process for obtaining the non-slip digital ink described above comprising:
i. Grinding of the frit or mixture of frits concentrate,
ii. Grinding of the raw material or mixture of raw materials concentrate,
iii. Mixture of the two concentrates obtained according to the previous grinding processes to obtain a mixture of concentrates, and
iv. Addition to the concentrate mixture of at least one anti-foaming agent, of at least one wetting agent and of at least one solvent until completing the total weight of the ink for its subsequent mixing.

By independently separating the grinding processes of the different concentrates, the non-slip digital ink is obtained more efficiently, since the grinding times of the frits are higher than the grinding times of the raw materials. Therefore, in this way each concentrate is ground for the time strictly required.

Moreover, co-grinding of raw materials and frits has been found to affect the ultimate stability of the non-slip digital ink composition.

A method of measuring the non-slip property is the UNE-ENV 12633:2003 standard "Method for determining the value of the slip/skid resistance of polished and unpolished pavements". This test method, also known as the friction pendulum test, consists of using an apparatus that reproduces the friction of a heel on a certain floor. For this, the pendulum test equipment consists, broadly speaking, of a skate covered with an elastomer arranged at the end of the arm of the pendulum; a device for raising and lowering the suspension axis of the pendulum arm, so that the shoe can oscillate freely on the surface of the test piece and be adjusted to travel a surface over a fixed length of (126 ± 1) mm; and a marking needle, balanced to the suspension axis, which indicates, on a circular scale, the furthest position reached by the pendulum arm in its swing. Said circular scale contains marks from 0 to 150 (Rd value) in intervals of 5 units. To carry out the friction measurement, the suspension shaft is raised to an initial horizontal position so that the marker needle indicates a value of 0. The test piece is placed in its longest dimension along the direction of the pendulum's travel, and centred with respect to the rubber skid and the suspension shaft of the pendulum. The surface of the test piece and the rubber skid is moisturised with a large amount of water and, then the pendulum and marker needle are dropped from the initial horizontal position. The position of the marker needle on the scale is noted. The same measurement method is repeated a total of five times.

Taking this standard as a reference, the non-slip digital ink object of the invention is characterised by providing a slip-resistance value Rd on the ceramic tile once fired, equal to or greater than 45, when the amount of ink deposited on the ceramic tile is equal to or greater than 50 g/m².

Accordingly, a third object of the present invention is a ceramic tile printed with the non-slip digital ink, according to the present invention, and fired, characterised in that, prior to the application of the non-slip digital ink, glazes are applied, alone or in combination with chromatic digital inks, to obtain the desired aesthetic and/or chromatic effects, which are not altered or modified after application and firing with the non-slip digital ink.

### PREFERRED EMBODIMENTS

The following examples are provided for illustrative purposes and are not intended to limit the present invention. Furthermore, the present invention covers all possible combinations of particular and preferred embodiments indicated herein.

Four frit or mixture of frits concentrates were prepared in accordance with the present invention. The first (CF1) and second (CF2) in a non-polar medium and the third (CF3) and fourth (CF4) in a polar medium. To do this, each concentrate was subjected to a grinding process until a particle size (D90) equal to or less than 300 nm was achieved. The table shows the composition of each of them, as well as the softening temperature of each frit.

**Table 1**

| | COMPONENT | CF1 | CF2 | CF3 | CF4 |
|---|---|---|---|---|---|
| Frit 1 (950°C) | Frit | 53 | 5 | | |
| Frit 2 (1100°C) | Frit | | 8 | 25 | |
| Frit 3 (1180°C) | Frit | | 20 | 15 | 35 |
| Exxol D80 | Solvent with a viscosity less than or equal to 20 cP (25°C) | 12 | 17.80 | | |
| 2-ethylhexylpalmitate | Solvent with a viscosity less than or equal to 20 cP (25°C) | 25 | 35 | | |
| Cyclohexanone ester | Solvent with a viscosity greater than 20 cP (25°C) | 4.59 | 10.8 | | |
| Water | Solvent with a viscosity less than or equal to 20 cP (25°C) | | | 33 | 28 |
| 2,3-butanediol | Solvent with a viscosity less than or equal to 20 cP (25°C) | | | 12 | 13.60 |
| Cyclohexanone | Solvent with a viscosity less than or equal to 20 cP (25°C) | | | 5 | 10 |
| Polyethylene glycol 200 | Solvent with a viscosity greater than 20 cP (25°C) | | | | 5 |
| 1,4-butanediol | Solvent with a viscosity greater than 20 cP (25°C) | | | 5.9 | 5 |
| Acrylic copolymer derivative | Dispersant | 3.41 | 3 | | |
| Polyacrylate salt and phosphoric polyether | Dispersant | 2 | 0.4 | | |
| Derived carboxylic acids | Dispersant | | | 4.10 | |
| Polymeric fatty esters | Dispersant | | | | 1.50 |
| Polymeric esters | Dispersant | | | | 1.90 |

Likewise, four concentrates of raw material or mixture of raw materials were also prepared, according to the present invention. The first (CMP1) and second (CMP2) in a non-polar medium and the third (CMP3) and fourth (CMP4) in a polar medium. For this, each concentrate was subjected to the grinding process according to the present invention, until a particle size (D90) equal to or less than 300 nm is achieved.

Specifically, the grinding process of each raw material or mixtures of raw materials concentrate, comprises the following steps:
i. Mixing in a mixer a raw material or a mixture of solid raw materials in a percentage by weight comprised between 36% and 64% of the weight of the concentrate,
ii. Introduction in a mill, with microbeads having a diameter of 0.3 - 0.4 mm for grinding, of:
- the raw material or mixture of previously mixed solid raw materials,
- at least one dispersant liquid in a percentage by weight comprised between 3.95% and 7% of the weight of the concentrate, and
- at least one solvent or mixture of solvent liquids up to the total weight of the concentrate, and

iii. Grinding until a D90 particle size of 300 nm or less is achieved.

**Table 2**

| | COMPONENT | CMP1 | CMP2 | CMP3 | CMP4 |
|---|---|---|---|---|---|
| Quartz | Raw material | 22 | 5 | | 30 |
| Alumina | Raw material | 14 | | 13 | 12 |
| Mullite | Raw material | | 20 | | |
| Sodium feldspar | Raw material | | 15 | | 10 |
| Potassium feldspar | Raw material | | 10 | | |
| Wollastonite | Raw material | | | 10 | |
| Zinc oxide | Raw material | | 14 | 5 | 8 |
| Exxol D80 | Solvent with a viscosity less than or equal to 20 cP (25°C) | 13.51 | 10 | | |
| 2-ethylhexylpalmitate | Solvent with a viscosity less than or equal to 20 cP (25°C) | 35.5 | 20 | | |
| Cyclohexanone ester | Solvent with a viscosity greater than 20 cP (25°C) | 8 | 2.06 | | |
| Water | Solvent with a viscosity less than or equal to 20 cP (25°C) | | | 10 | 15 |
| 2,3-butanediol | Solvent with a viscosity less than or equal to 20 cP (25°C) | | | 21.50 | 18 |
| Cyclohexanone | Solvent with a viscosity less than or equal to 20 cP (25°C) | | | 20 | 1.06 |
| Polyethylene glycol 200 | Solvent with a viscosity greater than 20 cP (25°C) | | | | 2 |
| 1,4-butanediol | Solvent with a viscosity greater than 20 cP (25°C) | | | 15 | |
| Acrylic copolymer derivative | Dispersant | 3.10 | 1.50 | | |
| Polyacrylate salt and phosphoric polyether | Dispersant | 3.89 | 2.44 | | |
| Derived carboxylic acids | Dispersant | | | | 0.54 |
| Polymeric fatty esters | Dispersant | | | 2.50 | 1.50 |
| Polymeric esters | Dispersant | | | 3 | 1.90 |

Four non-slip digital inks were prepared from the concentrates, according to the present invention, the ink T1 and T2 in non-polar medium and the inks T3 and T4 in a polar medium. The method followed for the preparation of the ink compositions was:
i. Mixture of the two concentrates, the frits and the raw materials, obtained according to the grinding processes to obtain a mixture of concentrates,
ii. Addition to the mix of concentrates of:
- at least one anti-foaming agent in a percentage by weight comprised between 0.020% and 0.05% of the weight of the ink,
- at least one wetting agent in a percentage by weight comprised between 0.05% and 0.20% of the weight of the ink,
- at least one solvent up to the total weight of the ink,

iii. Mixing.

**Table 3**

| | | T1 | T2 | T3 | T4 |
|---|---|---|---|---|---|
| CF1 | Non-polar medium frit concentrate | 76.1 | | | |
| CF2 | Non-polar medium frit concentrate | | 76.1 | | |
| CF3 | Polar medium frit concentrate | | | 76.1 | |
| CF4 | Polar medium frit concentrate | | | | 76.1 |
| CMP1 | Non-polar medium raw materials concentrate | 23.5 | | | |
| CMP2 | Non-polar medium raw materials concentrate | | 23.5 | | |
| CMP3 | Polar medium raw materials concentrate | | | 23.5 | |
| CMP4 | Polar medium raw materials concentrate | | | | 23.5 |
| BYK67 | Anti-foaming agent | 0.02 | | 0.015 | 0.020 |
| BYK88 | Anti-foaming agent | | 0.030 | 0.020 | 0.025 |
| Polyester modified polydimethylsiloxanes | Wetting agent | 0.025 | | | 0.05 |
| Non-ionic surfactants | Wetting agent | 0.025 | 0.02 | 0.1 | 0.10 |
| Cyclohexanone ester | Solvent with a viscosity greater than 20 cP (25°C) | 0.33 | 0.15 | | |
| 2,3-butanediol | Solvent with a viscosity less than or equal to 20 cP (25°C) | | 0.20 | 0.1 | 0.205 |
| Cyclohexanone | Solvent with a viscosity less than or equal to 20 cP (25°C) | | | 0.165 | |

### Example 1. Application of non-slip digital ink on porous single-fired ceramic tile with a transparent gloss effect.

Two ceramic tiles CT1 and CT2 were prepared, both raw and glazed with a glaze that provides a transparent gloss effect when subjected to a single porous firing cycle.

On the CT1 ceramic tile, five chromatic inks formulated in a non-polar medium were printed separately and by means of a DoD ink-jet equipment, which allow the cyan, brown, pink, yellow and black colours to be developed. In all colours the application weight of each ink was 20 g/m².

On this CT2 ceramic tile, the same five chromatic inks formulated in a non-polar medium were printed separately and by means of a DoD ink-jet equipment, which allow the cyan, brown, pink, yellow and black colours to be developed. In all colours the application weight of each ink was also 20 g/m². Next, on said ceramic tile with the five colours deposited, the non-slip digital ink T1 according to the present invention was also printed by means of the same DoD ink-jet equipment. The non-slip T1 digital ink was deposited on the entire ceramic tile with a weight of 50 g/m².

Lastly, both ceramic tiles CT1 and CT2 were fired in a single porous firing type firing cycle, commonly used in the ceramic tile sector, with a maximum temperature of 1,120°C.

Once fired, ceramic tiles CT1 and CT2 were evaluated from the point of view of chromatic rendering of each colour and gloss at 60° of the fired glaze. The following table shows the measurement of the chromatic parameters L, a* and b* in both ceramic tiles for each of the colours, as well as the gloss of the fired glaze in GU units. As can be seen from the application of the non-slip digital ink T1 according to the present invention, it does not alter the chromatic effect or the final gloss of the ceramic tile.

**Table 4**

| | CT1 | | | CT2 | | |
|---|---|---|---|---|---|---|
| | L | a* | b* | L | a* | b* |
| Cyan | 52.9 | -9.15 | -15.25 | 52.75 | -9.35 | -15.05 |
| Brown | 39.58 | 18.23 | 16.9 | 39.20 | 18.12 | 16.25 |
| Pink | 53.43 | 31.02 | 7.59 | 53.08 | 31.12 | 7.30 |
| Yellow | 79.71 | 3.59 | 44.23 | 79.52 | 3.24 | 44.31 |
| Black | 29.85 | 1.52 | 2.63 | 29.95 | 1.78 | 2.45 |
| Gloss (60°) | 104 | | | 104 | | |

Likewise, on both ceramic tiles CT1 and CT2 the non-slip property was evaluated, according to the UNE-ENV 12633:2003 standard. The following table shows the results obtained. As can be seen, the application of the non-slip digital ink T1 provides the surface of the ceramic tile CT2 with an Rd value equal to or greater than 45.

**Table 5**

| | CT1 | CT2 |
|---|---|---|
| Rd (UNE-ENV 12633:2003 standard) | 20 | 55 |

### Example 2. Application of non-slip digital ink on porous single-fired ceramic tile with a matt effect.

Two ceramic tiles CT3 and CT4 were prepared, both raw and glazed with a glaze that provides a matt effect when subjected to a single porous firing type firing cycle.

On the CT3 ceramic tile, five chromatic inks formulated in a non-polar medium were printed separately and by means of a DoD ink-jet equipment, which allow the cyan, brown, pink, yellow and black colours to be developed. In all colours the application weight of each ink was 20 g/m².

On this CT4 ceramic tile, the same five chromatic inks formulated in a non-polar medium were printed separately and by means of a DoD ink-jet equipment, which allow the cyan, brown, pink, yellow and black colours to be developed. In all colours the application weight of each ink was also 20 g/m². Next, on said ceramic tile with the five colours deposited, the non-slip digital ink T2 according to the present invention was also printed by means of the same DoD ink-jet equipment. The non-slip T2 digital ink was deposited on the entire ceramic tile with a weight of 85 g/m².

Lastly, both ceramic tiles CT3 and CT4 were fired in a single porous firing type firing cycle, commonly used in the ceramic tile sector, with a maximum temperature of 1,140°C.

Once fired, ceramic tiles CT3 and CT4 were evaluated from the point of view of chromatic performance of each colour. The following table shows the measurement of the chromatic parameters L, a* and b* in both ceramic tiles for each of the colours. As can be seen from the application of the non-slip digital ink T2 according to the present invention, it does not alter the final colour effect of the ceramic tile.

**Table 6**

| | CT3 | | | CT4 | | |
|---|---|---|---|---|---|---|
| | L | a* | b* | L | a* | b* |
| Cyan | 50.01 | -9.85 | -16.7 | 50.21 | -9.25 | -16.8 |
| Brown | 40.21 | 19.4 | 19.91 | 40.26 | 19.37 | 20.02 |
| Pink | 56.11 | 30.19 | 8.89 | 56.51 | 30.58 | 8.94 |
| Yellow | 78.46 | 6.18 | 45.16 | 78.01 | 6.50 | 45.55 |
| Black | 27.81 | 0.79 | 1.59 | 27.23 | 0.65 | 1.45 |

Likewise, on both ceramic tiles CT3 and CT4 the non-slip property was evaluated, according to the UNE-ENV 12633:2003 standard. The following table shows the results obtained. As can be seen, the application of the non-slip digital ink T2 provides the surface of the ceramic tile CT4 with an Rd value equal to or greater than 45.

**Table 7**

| | CT3 | CT4 |
|---|---|---|
| Rd (UNE-ENV 12633:2003 standard) | 25 | 50 |

### Example 3. Application of non-slip digital ink on porcelain ceramic tile with a transparent gloss effect.

Two ceramic tiles CT5 and CT6 were prepared, both raw and glazed with a glaze that provides a transparent gloss effect when subjected to a porcelain-type firing cycle.

On the CT5 ceramic tile, five chromatic inks formulated in a non-polar medium were printed separately and by means of a DoD ink-jet equipment, which allow the cyan, brown, pink, yellow and black colours to be developed. In all colours the application weight of each ink was 20 g/m².

On this CT6 ceramic tile, the same five chromatic inks formulated in a non-polar medium were printed separately and by means of a DoD ink-jet equipment, which allow the cyan, brown, pink, yellow and black colours to be developed. In all colours the application weight of each ink was also 20 g/m². Next, on said ceramic tile with the five colours deposited, the non-slip digital ink T3 according to the present invention was also printed by means of the same DoD ink-jet equipment. The non-slip T3 digital ink was deposited on the entire ceramic tile with a weight of 72 g/m².

Lastly, both CT5 and CT6 ceramic tiles were fired in a porcelain type firing cycle, commonly used in the ceramic tile sector, with a maximum temperature of 1,250°C.

Once fired, ceramic tiles CT5 and CT6 were evaluated from the point of view of chromatic rendering of each colour and gloss at 60° of the fired glaze. The following table shows the measurement of the chromatic parameters L, a* and b* in both ceramic tiles for each of the colours, as well as the gloss of the fired glaze in GU units. As can be seen from the application of the non-slip digital ink T3 according to the present invention, it does not alter the chromatic effect or the final gloss of the ceramic tile.

**Table 8**

| | CT5 | | | CT6 | | |
|---|---|---|---|---|---|---|
| | L | a* | b* | L | a* | b* |
| Cyan | 51.41 | -4.12 | -14.05 | 50.95 | -4.25 | -14.85 |
| Brown | 41.44 | 18.31 | 17.07 | 41.05 | 18.20 | 17.15 |
| Pink | 51.95 | 31.25 | 8.06 | 51.80 | 31.20 | 8.10 |
| Yellow | 80.31 | -0.22 | 37.95 | 80.35 | -0.25 | 37.85 |
| Black | 27.82 | 0.89 | -0.4 | 27.85 | 0.92 | -0.35 |
| Gloss (60°) | 105 | | | 105 | | |

Likewise, on both tiles CT5 and CT6 the non-slip property was evaluated, according to the UNE-ENV 12633:2003 standard. The following table shows the results obtained. As can be seen, the application of the non-slip digital ink T3 provides the surface of the ceramic tile CT6 with an Rd value equal to or greater than 45.

**Table 9**

| | CT5 | CT6 |
|---|---|---|
| Rd (UNE-ENV 12633:2003 standard) | 25 | 45 |

### Example 4. Application of non-slip digital ink on porcelain ceramic tile with a matt effect.

Two ceramic tiles CT7 and CT8 were prepared, both raw and glazed with a glaze that provides a matte effect when subjected to a porcelain type firing cycle.

On the CT7 ceramic tile, five chromatic inks formulated in a non-polar medium were printed separately and by means of a DoD ink-jet equipment, which allow the cyan, brown, pink, yellow and black colours to be developed. In all colours the application weight of each ink was 20 g/m².

On this CT8 ceramic tile, the same five chromatic inks formulated in a non-polar medium were printed separately and by means of a DoD ink-jet equipment, which allow the cyan, brown, pink, yellow and black colours to be developed. In all colours the application weight of each ink was also 20 g/m². Next, on said ceramic tile with the five colours deposited, the non-slip digital ink T4 according to the present invention was also printed by means of the same DoD ink-jet equipment. The non-slip T4 digital ink was deposited on the entire ceramic tile with a weight of 90 g/m².

Lastly, both CT7 and CT8 ceramic tiles were fired in a porcelain type firing cycle, commonly used in the ceramic tile sector, with a maximum temperature of 1,200°C.

Once fired, ceramic tiles CT7 and CT8 were evaluated from the point of view of chromatic performance of each colour. The following table shows the measurement of the chromatic parameters L, a* and b* in both ceramic tiles for each of the colours. As can be seen from the application of the non-slip digital ink T4 according to the present invention, it does not alter the final colour effect of the ceramic tile.

**Table 10**

| | CT7 | | | CT8 | | |
|---|---|---|---|---|---|---|
| | L | a* | b* | L | a* | b* |
| Cyan | 50.4 | -7.1 | -20.47 | 50.35 | -7.15 | -20.35 |
| Brown | 42.7 | 19.6 | 19.2 | 42.50 | 19.45 | 19.38 |
| Pink | 84.97 | 2.66 | 2.81 | 85.02 | 2.25 | 2.95 |
| Yellow | 79.53 | 4.27 | 41.27 | 79.20 | 4.15 | 41.12 |
| Black | 29.45 | 0.21 | 1.65 | 29.50 | 0.25 | 1.72 |

Likewise, on both ceramic tiles CT7 and CT8 the non-slip property was evaluated, according to the UNE-ENV 12633:2003 standard. The following table shows the results obtained. As can be seen, the application of the non-slip digital ink T4 provides the surface of the ceramic tile CT8 with an Rd value equal to or greater than 45.

**Table 11**

| | CT7 | CT8 |
|---|---|---|
| Rd (UNE-ENV 12633:2003 standard) | 30 | 45 |

### Example 5. Application of non-slip digital ink on undecorated porcelain ceramic tile with a transparent gloss effect.

Two ceramic tiles CT9 and CT10 were prepared, both raw and glazed with a glaze that provides a transparent gloss effect when subjected to a porcelain-type firing cycle.

On the ceramic tile CT10, the non-slip digital ink T3 according to the present invention was printed by a DoD ink-jet equipment. The non-slip T3 digital ink was deposited on the entire ceramic tile with a weight of 72 g/m².

Lastly, both CT9 and CT10 ceramic tiles were fired in a porcelain type firing cycle, commonly used in the ceramic tile sector, with a maximum temperature of 1,250°C.

Once fired, ceramic tiles CT9 and CT10 were evaluated from the point of view of fired glaze gloss in GU units. As can be seen from the application of the non-slip digital ink T3 according to the present invention, it does not alter the final gloss of the ceramic tile.

**Table 12**

| | CT9 | CT10 |
|---|---|---|
| Gloss (60°) | 105 | 105 |

Likewise, on both ceramic tiles CT9 and CT10 the non-slip property was evaluated, according to the UNE-ENV 12633:2003 standard. The following table shows the results obtained. As can be seen, the application of the non-slip digital ink T3 provides the surface of the ceramic tile CT10 with an Rd value equal to or greater than 45.

**Table 13**

| | CT9 | CT10 |
|---|---|---|
| Rd (UNE-ENV 12633:2003 standard) | 25 | 45 |

## Claims

1. An ink composition that can be applied by means of drop-on-demand (DoD) ink-jet technology of the type which provides non-slip property when subjected to a firing cycle at a maximum temperature of 950 - 1,250°C, and comprising:
a. 76.1% of a frit or mixture of frits concentrate, obtained through a grinding process,
b. 23.5% of a concentrate of a solid raw material or mixture of solid raw materials, obtained through a grinding process comprising:
i. Mixing in a mixer of a raw material or mixture of solid raw materials, selected from the group comprising quartz, alumina, mullite, sodium feldspar, potassium feldspar, wollastonite and zinc oxide, and in a percentage by weight comprised between 36% and 64% of the weight of the concentrate,
ii. Introduction in a mill, with microbeads having a diameter of 0.3 - 0.4 mm for grinding, of the raw material or mixture of previously mixed solid raw materials, of at least one liquid dispersant in a percentage by weight comprised between 3.95% and 7% of the weight of the concentrate, and at least one solvent or mixture of liquid solvents up to the total weight of the concentrate,
iii. Grinding until a D90 particle size of 300 nm or less is achieved,
c. An anti-foaming agent or mixture of anti-foaming agents in a percentage by weight comprised between 0.020% and 0.05% of the weight of the ink,
d. A wetting agent or mixture of wetting agents in a percentage by weight comprised between 0.05% and 0.20% of the weight of the ink,
e. A solvent or mixture of solvents to complete the total weight of the ink.

2. The ink composition according to claim 1, wherein the frit or mixture of frits concentrate comprises:
a. A frit or mixture of frits having a particle size (D90) equal to or less than 300 nm, a softening temperature comprised between 950 and 1,180°C, in a percentage by weight comprised between 33% and 53% of the weight of the concentrate,
b. A dispersant or mixture of dispersants in a percentage by weight comprised between 3.4% and 5.40% of the weight of the concentrate,
c. A solvent or mixture of solvents to complete the total weight of the concentrate.

3. The ink composition according to any of the preceding claims wherein the solvent or mixture of solvents is polar or non-polar.

4. The ink composition according to any of the preceding claims wherein the solvent or solvent mixture has a viscosity at 25°C comprised between 1 cP and 50 cP.

5. The ink composition according to any of the preceding claims wherein at least 80% of the solvent mixture has a viscosity at 25°C equal to or less than 20 cP.

6. The ink composition according to claim 1 wherein the final viscosity values at 40°C as a function of the shear rate of the concentrate are:
a. Between 3 cP and 35 cP at 10 s⁻¹ shear rate,
b. Between 10 cP and 20 cP at 100 s⁻¹ shear rate,
c. Between 10 cP and 20 cP at 1000 s⁻¹ shear rate.

7. The ink composition according to claim 1 wherein the final surface tension value of the concentrate is comprised between 15 mN/m and 35 mN/m.

8. A method of production of the composition of the non-slip digital ink, according to any of the preceding claims, comprising the following steps:
i. Grinding of the frit or mixture of frits concentrate,
ii. Grinding of the raw material or mixture of raw materials concentrate,
iii. Mixture of the two concentrates obtained according to the previous grinding processes to obtain a mixture of concentrates, and
iv. Addition to the concentrate mixture of the at least one anti-foaming agent, of the at least one wetting agent and of the at least one solvent until completing the total weight of the ink for its subsequent mixing.

9. A ceramic tile printed with a non-slip ink composition according to any of the preceding claims and fired, **characterised in that** it presents an Rd value equal to or greater than 45, when the amount of said non-slip ink deposited on said ceramic tile is equal to or greater than 50 g/m².

10. The ceramic tile printed with a non-slip digital ink composition according to any of the previous claims and fired, **characterised in that** prior to the application of the non-slip ink, glazes are applied, alone or in combination with chromatic digital inks, to obtain the desired aesthetic and/or chromatic effects, which are not altered or modified after application and firing with the non-slip digital ink.
